# EUROPEAN PATENT SPECIFICATION

(11) **EP 2 753 407 B1**
(45) Date of publication and mention of the grant of the patent: **25.05.2016**
(21) Application number: 13802718.0
(22) Date of filing: 15.11.2013
(51) Int. Cl.: B01D 29/11, B01D 29/52, B01D 29/66, B01D 29/68, B01D 29/23

(54) **CYLINDRICAL FILTER CANDLE AND BACKFLUSH FILTER WITH SAME**
ZYLINDRISCHE FILTERKERZE UND RÜCKSPÜLFILTER DAMIT
BOUGIE FILTRANTE CYLINDRIQUE ET FILTRE À RINÇAGE À CONTRE-COURANT COMPRENANT LA BOUGIE

(30) Priority: 22.11.2012 DE 202012104534 U
(43) Date of publication of application: 16.07.2014
(73) Proprietor: Boll & Kirch Filterbau GmbH, 50170 Kerpen (DE)
(72) Inventor: CARTARIUS, Karsten, 52391 Vettweiß (DE); FINSEL, Andreas, 50858 Köln (DE); JELLINGGAARD, Robert, 3200 Helsinge (DK)
(74) Representative: Althaus, Arndt
(86) International application number: PCT/IB2013/060175
(87) International publication number: WO 2014/080329

(56) References cited:
- WO-A1-01/89658
- GB-A- 2 065 486
- US-A- 1 945 839
- US-A1- 2004 238 435
- US-B1- 7 297 265

## Description

The invention relates to a cylindrical filter candle for a backflush filter comprising a plurality of filter candles and at least one backflushing member for the filter candles for filtering fluids, in particular for filtering seawater or saltwater, having a cylindrical filter wall, which is formed by means of a filter medium and through which fluid to be purified can flow, having two filter candle ends, of which at least one filter candle end is open, having an interior enclosed by the filter wall, and having at least one flushing element, which is arranged in the interior, is rotatable about a longitudinal axis of the filter candle, and which is provided with a radially projecting flushing gap movable along the inner face of the filter wall by rotation of the flushing element in order to backflush the filter wall. The invention furthermore also relates to a backflush filter having a plurality of filter candles and having at least one backflushing member for the filter candles for filtering fluids, in particular for filtering seawater or saltwater, having an inlet for fluid to be filtered, having an outlet for filtered fluid, each filter candle comprising a cylindrical filter wall, which is formed by means of a filter medium and through which the fluid to be purified can flow, two filter candle ends, of which at least one filter candle end is open, and an interior enclosed by the filter wall and in which at least one flushing element rotatable about a longitudinal axis of the filter candle is arranged, said flushing element being provided with a radially projecting flushing gap movable along the inner face of the filter wall by rotation of the flushing element in order to backflush the filter wall.

To filter fluids, backflush filters that are provided with a backflushing device in order to subject a cylindrical filter insert or a cylindrical filter candle to a backflushing process in order to detach particles of dirt and impurities that have deposited on the dirty side of a filter wall forming the peripheral wall of the filter candle or of the filter medium have been used for many years. Numerous backflush filters are based on a backflushing using their own medium, in which a countercurrent with respect to the direction of filtration is generated in the backflushing process via a pressure difference between the clean side with filtered fluid and a flushing outlet of the backflushing device.

With one design of backflush filters, an individual annular screen filter is used in the backflush filter and accordingly has a relatively large diameter, as a result of which rotatable backflushing members can be arranged within the cylindrical annular screen filter in a relatively difficulty-free manner and can be used to clean off the inner face of the filter wall. Backflush filters of this type with a cylindrical annular screen filter insert are known for example from DE 34 31 396 or DE 34 43 752 A1. With these backflush filters with annular screen filter insert, the flushing element can be rotated without difficulty via a rotary drive fitted externally on the filter housing.

Another design of backflush filters uses, within a filter housing, a multiplicity of cylindrical filter candles arranged on a common pitch circle about an axis of rotation, the ends of these filter candles being acted on via the backflushing member for the backflushing process. At least one end of the filter candles must be open in order to implement the backflushing process via this filter candle end. The rotary drive of the backflushing member usually consists of a motor flange-mounted on the filter housing cover or base. It is also known from WO 01/89658 A1 to implement the rotary movement between the backflushing member on the one hand and filter candle ends on the other hand in that the backflushing members for the filter candle ends are coupled to a turbine wheel, which is arranged in the flow inlet for the fluid to be filtered. With a backflush filter having a plurality of filter candles, only individual filter candles are in backflush operation, whereas the other filter candles are available for filtration. With identical overall size of the backflush filter, a larger available filter area can be achieved with a backflush filter having filter candles compared to a filter with annular screen filter insert, depending on the arrangement of the filter candles.

In the case of backflush filters having a plurality of filter candles, it is also known, for example from WO2007/062763 A1, to arrange a movable cleaning element in the interior of the filter candles. With this embodiment, both filter candle ends have to be open however, and the cleaning element movable to and fro is dimensioned in such a way that at least one passage or annular gap remains between the cleaning element on the one hand and the filter wall on the other hand in order to also build up a cross-flow at the inner face in addition to the backflushing in counterflow when cleaning off the filter wall in order to increase the cleaning effect. The cleaning element may additionally also be provided with flow-directing elements or a coil in order to rotate the cleaning element during the movement to and fro.

Document US 7 297 265 discloses a backwash strainer equipped with a mechanism for enhancing performance of a backwash operation by imparting a cyclonic flow to liquid to be filtered.

### Disclosure of Invention

### Technical Problem

Proceeding from the above-mentioned prior art, the object of the invention is to create a backflush filter having high filter area, it being possible to backflush the available filter area via a backflushing device with high cleaning action.

### Solution to Problem

To achieve this object, a cylindrical filter candle according to Claim 1 and a backflush filter according to Claim 15 are proposed in accordance with the invention. A cylindrical filter candle according to the invention, in particular for use for a backflush filter comprising a plurality of filter candles and having a backflushing device is characterized in accordance with the invention in that the flushing element arranged in the interior and rotatable about a longitudinal axis of the filter candle is rotatably mounted on the respective associated filter candle and is formed as a conical hollow shaft with a closed small shaft end and with an axially open large shaft end, the flushing gap projecting as far as the inner face of the filter wall of the filter candle extending between the small and the large shaft end, and the flushing element being connected in torque proof manner for conjoint rotation to at least one turbine wheel, which serves as a driving member and is arranged in the filter candle. Any cylindrical filter candle according to the invention is consequently provided as a type of turbine candle with a flushing element arranged in the interior and rotatable by the fluid flow, the dirty side of the filter wall, specifically the inner face of the filter wall, being cleaned off via the flushing gap of said flushing element in a manner locally delimited along the effective region of the flushing gap and therefore with high cleaning efficiency. Since the dirty side of the filter wall is suctioned substantially directly at the filter wall along a narrow band-like flushing gap, the filter wall is cleaned off at high speed and intensity in counterflow in relation to the filter direction. The conical shape of the flushing element also improves the distribution of speed within the flushing element and therefore also at the flushing gap. The turbine drive in turn ensures that the flushing element rotates during the backflushing process, and in this respect that the entire peripheral wall of the filter candle is reached due to the rotation of the flushing element.

In accordance with a variant of the filter candle, said candle is open at both filter candle ends and, in the interior of the filter candle open at both ends, two flushing elements each having their own flushing gap are arranged, in each case the large shaft ends of each flushing element being arranged at one of the filter candle ends and the small shaft ends being located opposite one another in the middle of the filter candle. With a corresponding filter candle end, the backflushing process with each flushing element is concentrated substantially over half the length of the filter candles, whereby the intensity of the backflushing process of the inner face of the filter wall is again increased via the respective flushing gap, and a good backflushing result is achieved even with long overall length of the filter candles. Since the two flushing elements taper conically inwardly, a uniform backflushing result of the inner face of the filter wall can be achieved approximately over the entire length of the filter candle, based on the total length of the filter candle.

In accordance with an advantageous embodiment, the filter candle can be provided with a bearing axis which is formed preferably by a continuous bearing rod, is arranged over the longitudinal axis of the filter candle, and extends from one filter candle end to the other filter candle end, wherein, in the variant with 2 flushing elements, both flushing elements may then be rotatably mounted on this bearing axis.

In the variant with two flushing elements, a supporting element for the bearing axis may further preferably be arranged between the smaller shaft ends of both flushing elements, the supporting element preferably consisting of a star disc which bears against the filter wall via its star ends. The additional supporting element between the two shaft ends of the flushing element provides an additional stabilization of the bearing axis and therefore also of the rotation of the respective flushing elements and also a constant gap distance, even at high rotation speeds.

In particular with the embodiment of a filter candle with two flushing elements, the turbine wheel can be arranged in the hollow space of the flushing element in each case. In particular in the backflushing process, in which at least one of the filter candle ends is connected to a flushing outlet or the like by means of a backflushing member, a relatively high rotation speed of each flushing element presently acted on by the backflushing member is achieved by the relatively high flow rate of the fluid flowing back against the filter direction with a turbine wheel arranged in the hollow space.

In accordance with an alternative embodiment, the filter candle may comprise two open filter candle ends, and a flushing element extending continuously from one filter candle end to the other filter candle end is arranged in the filter candle, a first turbine wheel preferably being arranged at, or close to, the open shaft end, and a second turbine wheel being arranged at, or close to, the other, closed shaft end. In this variant, only a single flushing element is consequently provided in the interior of the filter candle and tapers conically continuously from the large shaft end to the small shaft end and extends continuously between two candle ends. The two turbine wheels arranged at the opposed shaft ends in particular then rotate the flushing element when one or both filter candle ends is/are connected to a flushing outlet by means of a backflushing member. It is particularly advantageous in this embodiment if the two turbine wheels simultaneously form the rotary bearing between the filter candle on the one hand and the flushing element on the other hand. An additional bearing axis is then not necessary, and the flushing gap can extend substantially continuously from one filter candle end or shaft end of the backflushing member to the other shaft end. It could also be sufficient however, even with a single flushing element, to provide only one turbine wheel either at the small shaft end or at the large shaft end; furthermore, the turbine wheel could also in this embodiment be arranged in the hollow space close to the large open shaft end.

In order to additionally improve the cleaning-off effect of the inner face of the filter wall, an annular gap can be provided at least at one open filter candle end between the large shaft end of the flushing element and the filter candle, the gap width of this annular gap preferably being dimensioned in the radial direction in such a way that the gap width is equal to or greater than the radial spacing of the flushing gap from the inner face of the filter wall. As a result of this dimensioning, particles of dirt or agglomerations filtered out at the inner wall of the filter and of which the width is greater than the radial spacing of the flushing gap from the inner face of the filter wall can be suctioned off nevertheless via the annular gap, that is to say suctioned outside the flushing element, although corresponding agglomerations generally should not occur or should seldom occur due to the rotation of the flushing element. In the variant with annular gap, one of the turbine wheels may then in particular be arranged exactly in this annular gap and may form a rotary bearing for the flushing element.

For a concentricity of the flushing element that is as even as possible, said element can be provided with a bulge or a balancing weight, displaced by 180° in relation to the projecting flushing gap.

In accordance with yet a further, alternative embodiment, the filter candle may be open at both filter candle ends, and two flushing elements may be arranged in the interior, the smaller shaft ends of each flushing element being arranged opposite one another in the middle of the filter candle and the larger shaft ends being arranged facing one of the filter candle ends. In each case, the large shaft end is arranged downstream of a guiding portion or mouth portion, of which the outer periphery tapers towards the open filter candle end, the turbine wheel in each case being arranged or formed on the outer periphery of the guiding portion. The guiding portion formed on the end face of each flushing element ensures a conventional backflushing of the filter wall in the end region of the open filter candle ends, since fluid flows past the outer periphery of the flushing element in the end region and thus draws filtrate back through the filter wall. The guiding portion, tapering towards the open filter candle ends and open there, simultaneously forms an axial onflow opening for the hollow space of the flushing element, via which a cleaning flow is then in turn built up at the flushing gap and cleans off the filter wall during the rotation of the flushing element at the inner periphery transverse to the direction of filtration. Since the turbine wheel is simultaneously formed on the outer periphery of the flushing element, for example since, in the case of a flushing element produced from plastic, turbine guide vanes are integrally moulded directly on the outer periphery, the conventional cross-flow along the outer periphery of the flushing element simultaneously leads to a rotation of the respective flushing element. It is particularly advantageous here if the outer periphery of the guiding portion is closed and has no flushing gap. For additional twist increase, stationary guide vanes may be arranged in the open filter candle end.

In this third variant, a supporting element for the bearing axis can be arranged between the small shaft ends, or between end plates connected thereto. Furthermore, a spiral spring can be arranged in each case between the supporting element and the small shaft ends in order to improve the rotatability of the flushing element, which is slightly biased towards the filter candle end by means of the spiral spring. The supporting element for the bearing axis is preferably provided with apertures so that fluid can overflow between the two filter candle halves, the end plates further preferably leaving free an annular gap towards the filter wall, it being possible to implement a cross-flow via said annular gap.

With a backflush filter according to the invention, the above-mentioned object is achieved in that each filter candle is provided with a flushing element, which is mounted rotatably within the filter candle and is formed as a conical hollow shaft with a closed small shaft end and with an axially open large shaft end, the flushing element being connected to at least one turbine wheel, serving as a driving member for the flushing element and being arranged in the filter candle.

With a backflush filter in which filter candles are used which each have two flushing elements, it is in particular advantageous if, in the backflush filter, a rotatable backflushing member for each filter candle end is provided, with which the respective filter candle end can be connected to a flushing outlet. In this embodiment, the backflushing members may preferably be arranged with an angular offset from one another in such a way that one of the backflushing members cooperates with a specific filter candle at a different moment compared to the respective other backflushing member for the other filter candle end. It goes without saying that, for each pitch circle of filter candles, a plurality of backflushing members could also be associated with the same filter candle end depending on the position and number of the filter candles within the backflush filter, whereby a plurality of filter candles per pitch circle are then simultaneously at least partially in the backflushing process.

In the case of a backflush filter for use with filter candles with a single flushing element in the interior of the filter candle, it is in particular advantageous if the backflushing members are associated in pairs with the opposed filter candle ends of a filter candle to be backflushed, wherein, in accordance with a particularly specific embodiment, the backflushing member associated with the smaller shaft end of the backflushing member could then have a larger diameter or free cross section compared to the backflushing element associated with the larger shaft end of the backflushing member. As a result of this measure, liquid is likewise suctioned off from the interior of the filter candle at the smaller, closed shaft end of the flushing element during the backflushing process, more specifically suctioned outside the flushing element, whereby a relatively high cross-flow is still additionally obtained along the outer face of the flushing element and therefore the inner face of the filter wall to be backflushed.

Further advantages and embodiments of a filter candle according to the invention and also respective backflush filters will emerge from the following description of exemplary embodiments shown schematically in the drawing. In the drawing:
**Figure 1** shows a longitudinal section of a backflush filter according to the invention with filter candle according to the invention in accordance with a first variant;
**Figure 2** shows a longitudinal section of the filter candle used in the backflush filter according to Figure 1;
**Figure 3** shows a perspective view of the filter candle from Figure 2 with omitted filter wall;
**Figure 4** shows a view of the underside of the filter candle from Figure 2;
**Figure 5** shows a sectional view along V-V in Figure 2;
**Figure 6** shows a sectional view along VI-VI in Figure 2;
**Figure 7** on the basis of a schematic diagram shows the arrangement of backflushing members and embodiment of a filter candle in the case of a backflush filter in accordance with a second variant;
**Figure 8** shows a longitudinal section of the filter candle from Figure 7;
**Figure 9** shows a sectional view along IX-IX in Figure 8;
**Figure 10** shows a longitudinal section of a filter candle in accordance with a third exemplary embodiment; and
**Figure 11** shows a perspective view of the two flushing elements in the case of the filter candle according to Figure 10.

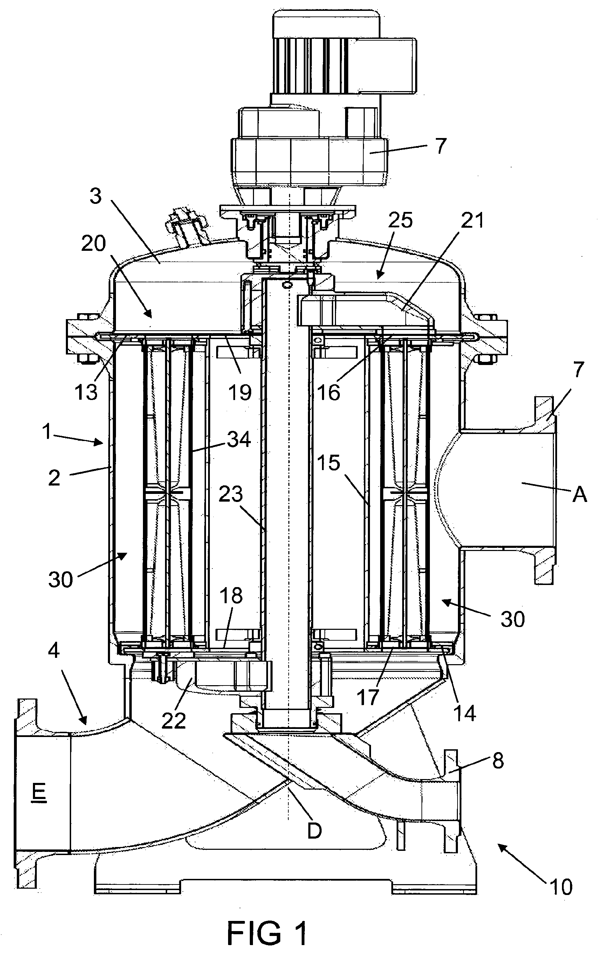

In Figure 1, a backflush filter in accordance with a first variant with a filter housing 1 is illustrated on the whole by reference sign 10, the middle part 2 of said housing being substantially cylindrical and screwed releasably to a cover part 3 and also provided with or connected to a lower part 4. A plurality of filter candles 30 in accordance with a first variant according to the invention with cylindrical filter wall 34 formed by a suitable filter medium are arranged in the middle part 2 of the backflush filter 10 separated over the periphery about a longitudinal centre axis D of the backflush filter 10 over just one pitch circle here. A fluid flowing in via an inlet E in the lower part 4 of the backflush filter 10 and to be purified, such as seawater or saltwater, but also a lubricant or the like, can be filtered by means of the filter wall 34 of all filter candles 30 in such a way that filtered fluid or filtrate can exit from the backflush filter 10 via a flange 7 arranged on the middle part 2 and forming an outlet A, and can be supplied as ballast water to a downstream operating means, such as a ballast water pump on a ship, but also as coolant to a motor or the like. The plurality of filter candles 30 are combined together with an upper perforated plate 13, a lower perforated plate 14, a central tubular portion 15 and a backflushing device denoted on the whole by reference sign 25, which *inter alia* comprises a first flushing arm 21 as an upper backflushing member, a second, lower flushing arm 22 as a second backflushing member, arranged in a manner angularly offset in relation to the first flushing arm, and a hollow connection shaft 23 interconnecting the two flushing arms 21, 22 and arranged rotatably over the longitudinal centre axis D, to form a filter insert 20 arranged exchangeably in the middle part 2 of the filter housing 10. The connection shaft 23 is in turn fluidically connected to a flushing outlet 8, to which a flushing valve can be flange-mounted in order to backflush individual filter candles 30 temporarily with filtrate via the connection shaft 23 and the flushing arms 21, 22, said filtrate flowing back in backflushing operation from the outside in through the filter wall 34 of the respective filter candle 30 in the backflushing process, against the direction of filtration, and in order to free the dirty side, that is to say the inner face of the filter wall 34, from deposits.

All filter candles 30 are open at both ends and both the upper perforated plate 13 and the lower perforated plate 14 have a corresponding hole opening 16 and 17 respectively for each filter candle 30 and also passages 18, 19 aligned with the hollow space of the tubular portion 15 so that fluid flowing in via the inlet 3 and the lower part 4 can enter the filter candles not only via the lower ends of the filter candles 30, but also via the upper ends of the filter candles 30. The two flushing arms 21, 22 are connected to the connection shaft 23 for conjoint rotation, the connection shaft in turn being rotatable by means of a separate motor 7, flange-mounted here to the cover part 3, but could also be driven where applicable by a turbine wheel (not shown) arranged after the fluid inlet. The basic structure of a backflush filter with flushing arms arranged with an angular offset from one another as flushing elements of a backflushing device for acting alternately at either end on individual filter candles in the backflushing process is known to a person skilled in the art, and therefore this principle, which is fundamentally known, is not explained further here.

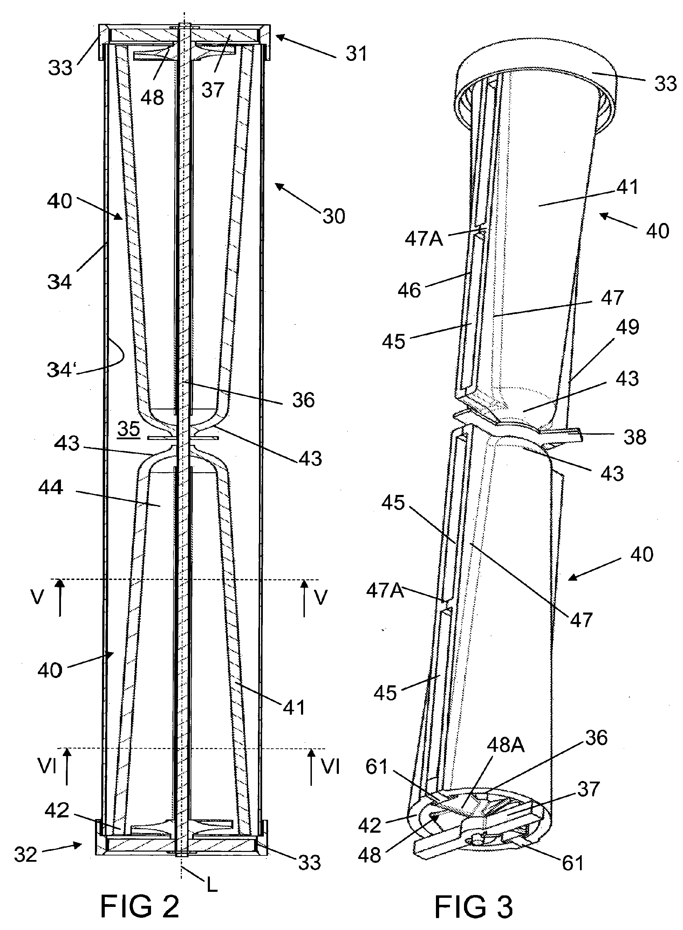

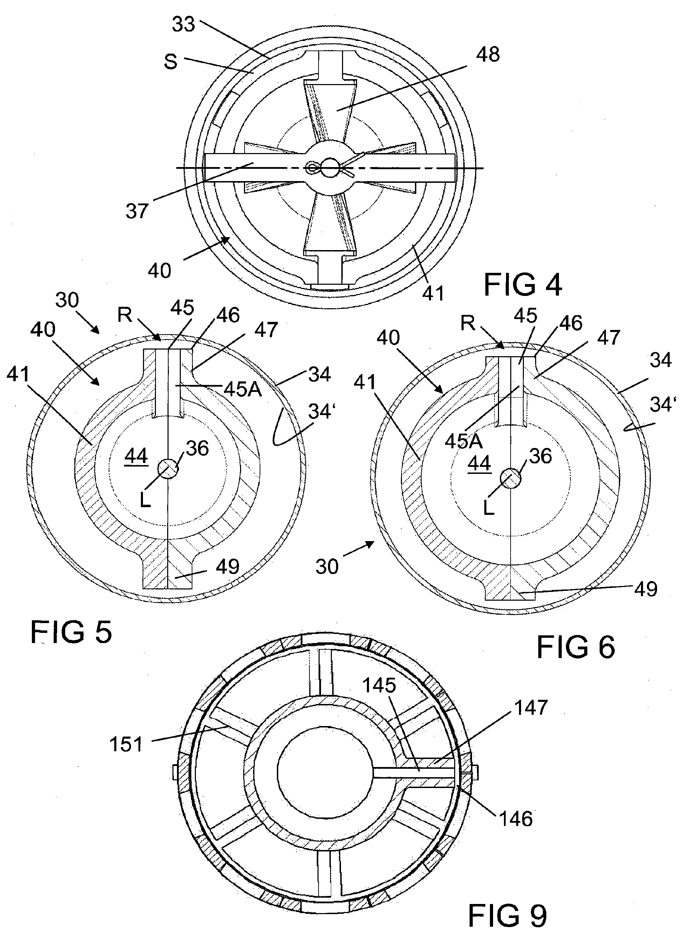

In the case of the backflush filter 1 according to Figure 1, a particular feature according to the invention lies in the structure of the individual filter candles 30, and the structure thereof will now be explained in detail with additional reference to Figures 2 to 6. Each filter candle 30 has a first filter candle end 31, which is arranged in the installed state on an upright backflush filter and is the upper filter candle end in Figure 1, and a second filter candle end 32, which is then the lower filter candle end, wherein, in the embodiment of the filter candle 30 according to Figures 2 to 6, the filter candle 30 can also be installed with its filter candle ends 31, 32 reversed due to the symmetrical structure. Each filter candle end 31, 32 is formed by an end cap 33, a cylindrical filter wall 34 running between both end caps 33 and for example possibly being formed by a wire cloth, plastic cloth or another suitable filter material for filtering out impurities in fluids with the desired filter fineness. The filter wall 34 encloses a cylindrical interior 35, and both end caps 33 and in this respect also both filter candle ends 31, 32 are open in the extension of the interior 35, as a result of which fluid to be purified can flow into the interior 35 of the filter candle 30 both via the end cap 33 at the upper filter candle end 31 and via the end cap 33 at the lower filter candle end 32. The two end caps 33 at the filter candle ends are preferably designed in such a way that the end caps 33 can be inserted in a sealed manner into the hole openings (16, 17; Figure 1) in the respective perforated plates (13, 14; Figure 1) of the filter insert (20; Figure 1). An axial rod 36 is arranged over the longitudinal axis L of each filter candle 30 and, as can also be seen particularly clearly in Figures 3 and 4, is supported via a crosspiece 37 on the end caps 33 and, in the assembly state, is positioned and preferably fixed between these two end caps. The axial rod 36 forms a bearing axis for two flushing elements 40, which are arranged in the interior 35 in a manner rotatable about the bearing axis or the bearing rod 36 and have the same structure as one another. As can be clearly seen in Figures 2 and 3, each flushing element 40 is formed as a conical hollow shaft and is provided with a housing wall 41, which tapers substantially conically from an axially larger open end 42 to a smaller, closed shaft end 43. The two flushing elements 40 are positioned and mounted on the axial rod 36 in such a way that the two smaller shaft ends 43 face one another and the two larger shaft ends 42 face the open filter candle ends 31, 32 and plunge into the end caps 33, whereby fluid to be filtered enters the hollow space 44 of the flushing elements 40 predominantly via the open filter candle ends. In addition, the housing wall 41 of each flushing element 40 is provided on a sub-portion with a radially projecting longitudinal web 47 which extends practically over the entire length of the flushing element and on the radially projecting front face 46 of which a flushing gap 45 is formed. The longitudinal web 47 extends outwardly from the housing wall 41, which is partially round, but conically tapering between the shaft ends 42, 43, the radial depth of the longitudinal web 47 thus increasing from the large shaft end 42 to the small shaft end 43. The front face 46 and therefore also the open flushing gap 45 run in a plane that is arranged parallel to a plane intersecting the longitudinal axis L or the axial rod 36. The flushing gap is connected via a hollow slit in the middle of the longitudinal web 47 to the hollow space 44 of the flushing element and is only interrupted by a small stabilizing web 47A. The housing wall 41 of the flushing element 40 is additionally provided, opposite the longitudinal web 47 by 180°, with a balancing web 49 as a balancing weight, of which the end face is closed however in the shown exemplary embodiment, as a result of which each flushing element 41 has a flushing gap 45 only on one side on the longitudinal web 47 and not on the balancing web 49. The balancing web 49 is used predominantly to avoid imbalances during rotation of the flushing element 40 about the axial rod 36 forming the bearing axis. Both flushing elements 40 are arranged freely rotatably on the axial rod 36, for which purpose both flushing elements 40 are arranged between both shaft ends 43, 42 with sufficient clearance based on the spacing of the end caps 33 or crosspieces 37. A turbine wheel 48 is associated with the large shaft end 42 as a driving member for each flushing element 40 and is connected to the housing wall 41 of each flushing element 40 for conjoint rotation. The turbine wheel 48 is secured to the housing wall 41 surrounding the conical hollow shaft, preferably in the extension of the longitudinal web 47 forming the flushing gap 45 via its front face and also in the extension of the balancing web 49, for which purpose the turbine wheel 48, as can be clearly seen in Figure 3 at the lower shaft end 42, is fitted in a form-fitting manner via two of its mutually opposed wings 48a on retaining pieces 61 or is adhesively bonded or connected thereto. One of these retaining pieces 61 may simultaneously also close the end face of the flushing gap 45 of the large shaft end 42.

In order to stabilize the axial rod 36, even with large lengths of a filter candle 30 and therefore large spacing of the filter candle ends 31, 32 or end caps 33 over the longitudinal axis L, a star-shaped supporting element 38 is arranged in the shown exemplary embodiment between two small, closed shaft ends 43 of the two flushing elements 40 rotatable independently of one another, the axial rod 36 additionally also being able to bear against and be supported on the inner face 34' of the filter wall 34 via said supporting element without significantly impeding a fluid flow parallel to the longitudinal axis L.

The sectional views according to Figures 5 and 6 through the filter candle 30 in Figure 2 again illustrate that the housing wall 41 of each flushing element 40 tapers conically towards the middle of the filter candle 30, but at the same time the flushing gap 45 on the front face 46 of the longitudinal web 47 projecting radially based on the longitudinal axis formed by the axial rod 36 has a uniform spacing from the inner face 34' of the filter wall 34 independently of the rotary position and the position along the longitudinal axis L of the filter candle 34. The radial bulge or depth of the longitudinal web 47 increases from the large shaft end to the small shaft end of the flushing element 40 or decreases from the small shaft end to the large shaft end, as shown by a comparison of Figures 5 and 6; the radial spacing, indicated in Figures 5 and 6 by reference sign R, of the flushing gap 45 or radial spacing of the front face 46 of the longitudinal web 47 from the inner face 34' of the filter wall 34 does not change however. The two flushing elements 40 are supported entirely directly on the filter candle 30, and a filter candle 30 can also be exchanged individually together with the flushing elements 40 in the interior 35 of the filter candle 30.

In filtering operation, when fluid that is to be filtered, often referred to as pulp, enters the backflush filter 10 via the inlet E and here can enter each filter candle 30 both from above and from below due to the hollow space in the tubular portion 15, each flushing element 40 is rotated, at most at low speed, due to the pressure drop between the inlet E and outlet A that is generally lower compared to the backflushing process. The majority of the fluid flow enters the hollow space 44 of the flushing element 40 and exits from the flushing element 40 via the open slit 45A in the longitudinal web 47 and the flushing gap 45 in order to then be drawn through the filter wall 34 due to the pressure drop and supplied as filtrate at the outlet A to a downstream operating means where necessary. The tubular wall 15 together with the perforated plates 13, 14 here simultaneously at the filter insert separates the filtrate side from the pulp side of the backflush filter 10. Since the majority of the fluid flow passes through the hollow space 44 in the flushing element 40, impurities and floating particles that are larger than the width of the slit 45A or flushing gap 45, where present, would collect in part in the hollow space 44. Due to the rotation of each flushing element 40 also in filtering operation, it is possible to prevent relatively large deposits from collecting on the inner face 34' of the filter wall 34, since these would be mechanically wiped off by the longitudinal web 47 and/or the balancing web 49. To this end, brushes or the like could additionally also be arranged to the side of the flushing gap 45 and/or on the balancing web 49.

The primary function of the flushing element 40 or of both flushing elements 40 in the filter candle 30 then takes effect when one of the flushing arms 21, 22 is fluidically connected to one of the two open filter candle ends (31 in the case of the flushing arm 21 or 32 in the case of the flushing arm 22) and the flushing valve at the flushing outlet 8 is opened. In this situation, which defines the backflushing process, a greater pressure fall is provided and fluid flows, in the reverse direction compared to filtering operation, at high speed via the flushing arms 21 and 22 and the connection shaft 23 to the flushing outlet 8. A high suction effect that draws the filtrate from the clean side at the (filtrate) outlet A back through the filter wall 34 of the filter candle 30 presently in the backflushing process is accordingly produced at the flushing gap. The backflushing flow induced here has a greater flow rate than in filtering operation, as a result of which the flushing elements 40 are rotated accordingly at higher rotational speed due to the turbine wheels 48 connected thereto for conjoint rotation. The accordingly large pressure drop acts predominantly between the relatively narrow flushing gap 45 on the front face 46 of the longitudinal webs 47 and the inner face 34', locally opposite the flushing gap 45, of the filter wall 34, as a result of which the backflushing process can clean off the filter wall 34 locally and therefore with high intensity in counterflow to the direction of filtration. Backflushing can be implemented in a locally delimited manner with high intensity and with simultaneously low losses of filtrate according to the width of the flushing gap 45. Since only a small proportion of the available filter area of each filter candle 30, consequently the filter wall 34, is backflushed at any one moment, a significant rise in the intensity of the backflushing process is achieved. Due to the conical embodiment of the flushing element 40, approximately identical flow conditions are effective here over the length of any flushing element 40, since the tapering of the hollow space 40 towards the middle of the filter candle causes an approximately uniform distribution of speed in the axial direction in the flushing element 40. Due to the superimposed rotation of the flushing element 40, the entire cylindrical filter wall 34 is in turn cleaned off after a specific period of time required by the flushing element for a rotation of 360°. The duration of the backflushing process can be influenced and optimized by controlled or regulated actuation of the flushing valve.

Reference is now again made to Figure 4. Figure 4 shows an end view of one of the two filter candle ends. It can be clearly seen that an annular gap remains between the inner face of the end cap 33 and the outer surface of the housing wall 41 of the flushing element 40 and is provided in Figure 4 with reference sign S. In the backflushing process, when a flushing arm is arranged opposite the respective filter candle end, fluid is additionally removed via said annular gap S from the space located between the filter wall 34 and the outer face of the housing wall 41 of the flushing element 40. Fluid accordingly flows off here parallel to the axis and in this respect additionally generates a specific cross-flow along the inner face of the filter wall 34. The gap width S of the annular gap in the radial direction can be dimensioned here in such a way that it is slightly greater than the radial spacing (R, Figure 5) between the flushing gap (45, Figure 5) or the front face (46, Figure 5) of the longitudinal web (47, Figure 5) and the filter wall 34 so that particles which in some circumstances collect outside the flushing element 40 but in the interior 35 of the filter candle 30 can also be suctioned off via the annular gap. Such particles may also be agglomerations that may be wiped off by the longitudinal web 47 and the balancing web 49.

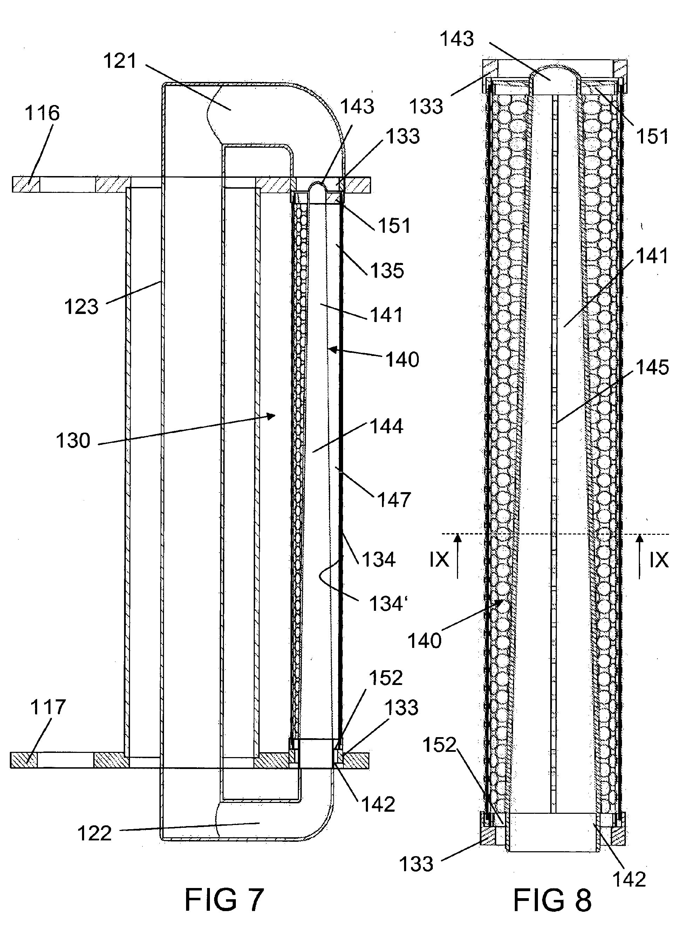

Figures 7, 8 and 9 show a second exemplary embodiment of a filter candle 130 for a backflush filter in accordance with a second variant. In contrast to the previous exemplary embodiment, the filter candle 130 comprises a single flushing element 140, which is arranged between the end caps 133 forming the filter candle ends and inserted into the perforated plates 116, 117 of a filter insert not otherwise illustrated further, and which extends continuously conically here from the larger, lower, open shaft end 142 to the closed, smaller, upper shaft end 143. The flushing element 140 via its housing wall 141 also forms a conically tapering hollow shaft, which, in principle as in the prior exemplary embodiment, as it can be clearly seen from Figure 9, is provided with a radially projecting longitudinal web 147, of which the end face 146 is open and forms a flushing gap 145, which extends over the entire length of the flushing element 140 with uniform spacing from the filter wall 134 of the filter candle 130. By contrast with the prior exemplary embodiment, two turbine wheels are provided here however, specifically a first turbine wheel 151, which is non-rotatably mounted externally on the housing wall 141 of the hollow shaft forming the flushing element 140, and a second turbine wheel 152, which is likewise non-rotatably mounted externally on the outer face of the flushing element 140, but in this case at, or close to, the larger shaft end 142. In the case of the flushing element 140, a bearing rod may optionally be omitted and instead the two turbine wheels 151, 152 take on the function of supporting the flushing element on and in the interior 135 of the filter candle 130. The flushing element can be supported with sufficient movability, for example by means of different plastic pairings of the turbine wheel on the one hand and the end cap or a cloth supporting element arranged there on the other hand.

In normal filtering operation, fluid may first flow here via the side of the filter candle 130, on which the smaller closed shaft end 14 is arranged, outside the housing wall 141 of the flushing element 140 into the interior 135 of the filter candle 130 and, as explained further above, may pass through the filter wall 134 via the pressure drop between the filter inlet and filter outlet and may be removed as filtrate. In the case of the filter candles 130, the upper flushing arm 121 and the lower flushing arm 122, which in turn, as indicated only schematically, are connected via a rotatable connection shaft 123 arranged centrally in the backflush filter, are arranged however in such a way that a specific filter candle 130 is cleaned off at a specific moment by both flushing arms 121, 122. Depending on the number of pitch circles, number of filter candles and number of flushing arms, only one filter candle or only a limited number of filter candles is consequently subjected to a backflushing process, whereas all other filter candles are located fully in filtering operation. Since, in the case of the filter candle 130, the backflushing member 140 tapers continuously conically from one filter candle end to the other 142, 143, the filter candles 130 are installed in a specific preferred direction, as indicated in Figure 7. In order to achieve a particularly advantageous backflushing effect, the upper flushing arm 121, which is associated with the smaller shaft end 143, has a larger diameter than the lower flushing arm 122. The lower flushing arm 122 is dimensioned in such a way that it is aligned exactly in a specific rotary position with the diameter of the lower shaft end 142 of the flushing element 140 and as a result only connects the hollow space 144 of the flushing element 140 to the fluid outlet. As a result of this measure, similarly to the previous exemplary embodiment, a backflushing of the filter wall 134 transverse to the direction of filtration is achieved with high intensity at the flushing gap 145, and the inner face of the filter wall 134 is cleaned off in accordance with the gap width of the flushing gap 145. The lower flushing arm 122 however causes no rotation of the flushing element 140. The rotation of the flushing element 140, so that the flushing gap 145 is rotated partially along the filter wall 134 and in this respect locally cleans the filter wall 134 in succession, is achieved via the upper flushing arm 121, of which the free cross section is adapted to the diameter of the end cap 133. The upper flushing arm 121 acts directly on the turbine wheel 151 at the small shaft end 143 of the flushing element 140. Due to the fact that the flushing element 140 is closed at the conically smaller shaft end 143, a cross-flow is built up via the upper flushing arm 121 only on the outer face of the housing wall 141 of the flushing element 140 and flows parallel to the filter wall, as viewed in the axial direction. Since the lower filter candle end is likewise simultaneously open, the turbine wheel 142 arranged there also causes an assisting rotation of the flushing element 140 due to the fluid flowing in there. By acting on a filter candle 130, the inner face of the filter wall 134 is consequently cleaned in counterflow on the one hand via the hollow space 144 and the flushing gap 145 with high intensity and in a locally delimited manner, whereas a cross-flow is built up simultaneously within the filter candle 134 via the other flushing arm 121, and deposits that have collected outside the flushing element 140 within the filter candle 130 are suctioned off. Since the free cross section between the smaller shaft end 143 and the end cap 133 is relatively large, relatively large impurities can also be removed via the cross-flow outside the flushing element 141. Since the hollow space 144 in the flushing element 140 simultaneously tapers, an approximately uniform distribution of speed and in this regard also a uniform cleaning-off of the inner face 134' of the filter wall 134, as viewed over the length of the filter candle 130, is produced in turn at the flushing gap 145 over the length of the backflushing element 140.

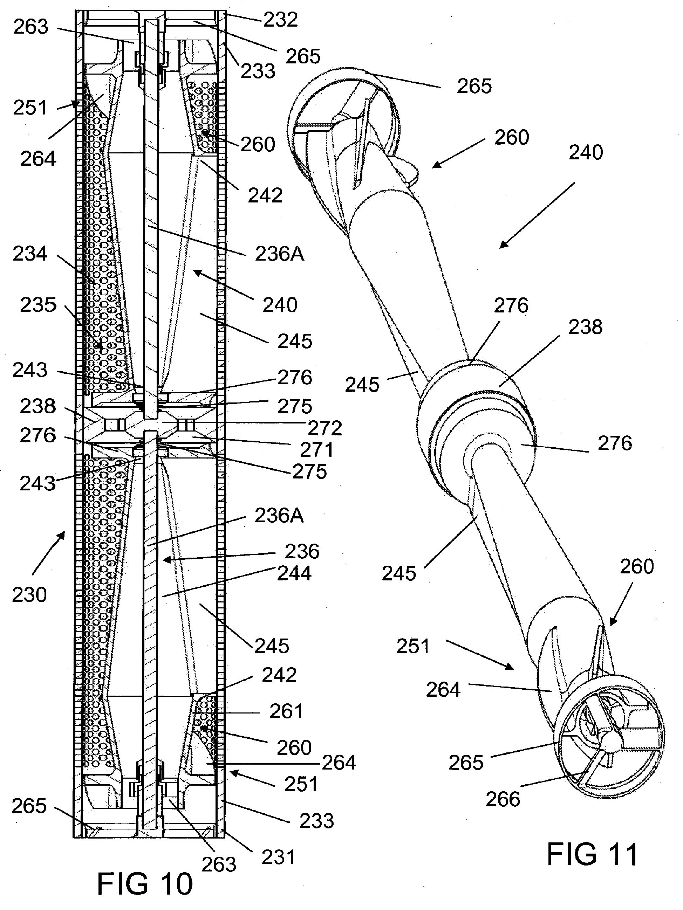

In the third exemplary embodiment of a filter candle 230 shown in Figures 10 and 11, two flushing elements 240 are again arranged in the interior 234 of said candle and are designed identically to one another and are both supported rotatably on a bearing axis 236, which here consists of two axis portions 236A, which extend between both filter candle ends 231, 332 of the filter candle 230. Both filter candle ends 231, 332 are formed by end caps 233, between which the filter wall 234, which in the shown exemplary embodiment in Figures 10 and 11 consists of a perforated plate, extends. As in the previous exemplary embodiment, the flushing element 240 tapers starting from a larger shaft end 242 towards the middle of the filter candle 230 to a small, closed shaft end 243, and between these two shaft ends 242, 243 a radially projecting flushing gap 245 extends, via which the inner face of the filter wall 234 can be cleaned off in the backflushing process. The large shaft end 242 of both flushing elements 240 is arranged here however distanced from the filter candle end 231 or 232, since a mouthpiece as guiding portion 260 is arranged upstream of the flushing element 240 in each case at the large shaft end, the outer periphery 261 of said mouthpiece tapering from the larger shaft end 242 of the actual flushing element 240, again conically in the direction of the filter candle end 231 or 232. The guiding portion 260 has an open mouth opening 263 which is arranged opposite the filter candle end 231 or 232 and via which, in the backflushing process, the interior 244 of each flushing element 240 is connected via a flushing plug (not shown here) to the dirt discharge of the backflush filter. Due to the tapering of the guiding portion 260 or mouthpiece, a relatively high cross-flow is built up in the backflushing process in particular in the end region of both flushing elements 240 and, in a manner that is conventional in principle, causes the end region of the filter candle wall 234 close to the two filter candles ends 231, 232 to be cleaned off. No radially projecting flushing gap 245 open towards the filter wall is formed in the region of the guiding portion 260, but said flushing gap extends only over the partial length of the flushing element 240 between the two shaft ends 242, 243. A plurality of guide vanes 264, which are preferably moulded integrally on the guiding portion 260 and take on the function of a turbine wheel 251 for each flushing element 240, are formed on the closed outer periphery 261 of the guiding portion 260, and separated thereover. In order to still increase the rotational speed of the flushing element 240 in the backflushing process, the bearing axis 236 in the shown exemplary embodiment is supported in the region of the filter candle ends 231 on a supporting ring 265, which is provided with guide vanes 266, which in particular in the backflushing process introduce an additional twist into the liquid flowing off over the outer periphery 261 of the guiding portion 260 and thus increase the rotational speed of the respective flushing element 240 associated with this half of the filter candle. It can be clearly seen in Figure 10 that here the bearing axis 236 consists of two axis portions 236A, which each extend from one of the supporting rings 265 to a disc-shaped supporting element 238 in the middle of the filter candle, this supporting element 238 being provided with axial apertures 271, via which fluid can flow from one half of the filter candle to the other, or vice versa. The apertures 271 are distributed over a pitch circle around a core piece 272, in which the two inner ends of the axis portions 236A are anchored and on which spiral springs 275 are supported at the end face, each of the two flushing elements 240 being biased by said springs in relation to the respective filter candle end 231 or 232 in order to improve the rotatability of the two flushing elements 240. The spiral springs 275 may each press here against an end plate 276, which is formed in each case at the small shaft end 243 of the flushing element 240. The diameter of the end plates 276 is preferably slightly smaller than the inner diameter of the filter wall 234, such that fluid can still overflow, via an annular gap on the end plate 276, into the apertures 271 at the edge.

Numerous modifications lying within the scope of protection of the accompanying claims are clear to a person skilled in the art from the above description. In the case of the second exemplary embodiment, only one turbine wheel could also be used, preferably at the smaller shaft end. The bearing could also be achieved via mechanical bearings or the like. The filter wall of the filter candles may vary in terms of material, design and filter fineness depending on the purpose and field of application. In the case of the filter candles according to the first variant or in the case of a backflush filter designed for use with these filter candles, a closure element could be associated with each flushing arm, said closure element closing the respective other candle end during the backflushing process. A supporting element between both flushing elements could be omitted, and it would also be possible to interconnect both flushing elements for conjoint rotation, such that the two flushing elements tapering from opposite directions towards the middle of the filter candle could actually only consist of one element.

## Claims

1. Cylindrical filter candle for a backflush filter preferably comprising a plurality of filter candles and at least one backflushing member for the filter candles for filtering fluids, in particular for filtering seawater or saltwater, having a cylindrical filter wall (34; 134; 234), which is formed by means of a filter medium and through which fluid to be purified can flow, having two filter candle ends (31, 32; 231, 232), of which at least one filter candle end is open, having an interior (35; 135) enclosed by the filter wall, and having at least one flushing element (40; 140; 240) which is arranged in the interior, is rotatable about a longitudinal axis (L) of the filter candle, and which is provided with a radially projecting flushing gap (45; 145; 245) movable along the inner face (34'; 134') of the filter wall by rotation of the flushing element (40; 140; 240) in order to backflush the filter wall (134), **characterized in that** the flushing element (40; 140; 240) is rotatably mounted on the filter candle (30; 130; 230), is formed as a conical hollow shaft with a closed small shaft end (43; 143: 243) and with an axially open large shaft end (42; 142; 242), between which the flushing gap (45; 145; 245) projecting radially as far as the inner face of the filter wall extends, and is torque proof connected to at least one turbine wheel (48, 151, 152; 251), arranged in the filter candle as a driving member.

2. Filter candle according to Claim 1, **characterized by** a bearing axis (36) arranged over the longitudinal axis and extending from one filter candle end to the other filter candle end for the at least one flushing element (40), which is mounted rotatably on said bearing axis.

3. Filter candle according to Claim 1 or 2, **characterized in that** the filter candle is open at both filter candle ends (31, 32) and two flushing elements (40) are arranged in the interior (34), the large shaft ends (42) of each flushing element (40) being arranged at one of the filter candle ends (31, 32) and the small shaft ends (43) being arranged opposite one another in the middle of the filter candle.

4. Filter candle according to Claims 2 and 3, **characterized in that** a supporting element (38) for the bearing axis (36) is arranged between the small shaft ends (43), the supporting element (38) preferably consisting of a star disc which bears via its star ends against the filter wall (34).

5. Filter candle according to one of Claims 1 to 4, **characterized in that** the turbine wheel (48) is arranged in the hollow space of the flushing element (40).

6. Filter candle according to Claim 1 or 2, **characterized in that** the filter candle (130) comprises two open filter candle ends, and a flushing element (140) extending continuously from one filter candle end to the other filter candle end is arranged in the filter candle (130), a first turbine wheel (152) preferably being arranged at, or close to, the open shaft end (142), and a second turbine wheel (151) preferably being arranged at, or close to, the other, closed shaft end (143), wherein preferably the two turbine wheels (151, 152) form the rotary bearing between filter candle (130) and flushing element (140).

7. Filter candle according to one of Claims 1 to 6, **characterized in that** an annular gap (S), of which the gap width in the radial direction is equal to or greater than the radial spacing of the flushing gap (45) from the inner face (34') of the filter wall, is provided at least at one open filter candle end (32) between the large shaft end (42) of the flushing element (40) and the filter candle (30).

8. Filter candle according to Claims 6 and 7, **characterized in that** a turbine wheel (152) is arranged in the annular gap and forms a rotary bearing for the flushing element.

9. Filter candle according to one of Claims 1 to 8, **characterized in that** the flushing element (40), displaced through 180° in relation to the projecting flushing gap (145), is provided with a bulge, a balancing weight, or balancing web (149).

10. Filter candle according to Claim 1 or 2, **characterized in that** the filter candle (230) is open at both filter candle ends (231, 232), and two flushing elements (240) are arranged in the interior, **in that** the smaller shaft ends (243) of each flushing element (240) are arranged opposite one another in the middle of the filter candle and the larger shaft ends (242) are arranged facing one of the filter candle ends (231, 232), and **in that** in each case the larger shaft end (242) is arranged downstream of a guiding portion (260), of which the outer periphery (261) tapers towards the open filter candle end (231, 232), the turbine wheel (251) in each case being arranged or formed on the outer periphery (261) of the guiding portion (260), wherein preferably the outer periphery (261) of the guiding portion (260) is closed and comprises no flushing gap.

11. Filter candle according to Claim 10, **characterized in that** stationary guide vanes (266) for producing twist are arranged in the open filter candle end (231, 232).

12. Filter candle according to one of Claims 10 or 11, **characterized in that** a supporting element (238) for the bearing axis (236) is arranged between the small shaft ends (243) or end plates (276) connected thereto, a spiral spring being arranged in each case between the supporting element (238) and the small shaft ends (243) or end plates (276).

13. Backflush filter having a plurality of filter candles and at least one backflushing member for the filter candles for filtering fluids, in particular for filtering seawater or saltwater, having an inlet (E) for fluid to be filtered, having an outlet (A) for filtered fluid, each filter candle comprising a cylindrical filter wall (34; 134), which is formed by means of a filter medium and through which the fluid to be purified can flow, two filter candle ends (31, 32), of which at least one filter candle end is open, and an interior (35; 135) enclosed by the filter wall (34; 134), at least one flushing element (40; 140) rotatable about a longitudinal axis (L) of the filter candle being arranged in said interior and being provided with a radially projecting flushing gap (45; 145) movable along the inner face (34'; 134') of the filter wall by rotation of the flushing element (40; 140) in order to backflush the filter wall, **characterized in that** each filter candle (30; 130) is provided with a flushing element (40; 140) which is mounted rotatably within the filter candle (30; 130) and is formed as a conical hollow shaft with a closed small shaft end (43; 143) and with an axially open large shaft end (42; 142), the flushing element (40; 140) being connected torque proof to at least one turbine wheel (48; 151), which is arranged in the filter candle as a driving member.

14. Backflush filter according to Claim 13, **characterized in that** the filter candles (30) are formed according to one of Claims 2 to 6, and, in the backflush filter, a rotatable backflushing member (21; 22) is provided for each filter candle end, with which the respective filter candle end is connectable to a flushing outlet, wherein preferably the backflushing members (21; 22) are arranged in a manner angularly offset in relation to one another in such a way that one of the backflushing members cooperates with a filter candle at a different moment in time compared to the other backflushing member.

15. Backflush filter according to Claim 13, **characterized in that** the filter candles (130) are formed according to one of Claims 6, 7 and/or 8, and backflushing members (121, 122) are associated in pairs with the opposed filter candle ends of a filter candle (130) to be backflushed, the backflushing element (122) associated with the small shaft end (143) of the backflushing member having a larger diameter or free cross section than the backflushing member associated with the larger shaft end (142) of the backflushing element.

## Patentansprüche

1. Zylindrische Filterkerze für einen vorzugsweise mehrere Filterkerzen und wenigstens ein Rückspülorgan für die Filterkerzen aufweisenden Rückspülfilter zum Filtern von Fluiden, insbesondere zum Filtern von See- oder Meerwasser, mit einer zylindrischen, mittels eines Filtermittels gebildeten, von zu reinigendem Fluid durchströmbaren Filterwand (34; 134; 234), mit zwei Filterkerzenenden (31, 32; 231, 232), von denen wenigstens ein Filterkerzenende offen ist, mit einem von der Filterwand umspannten Innenraum (35; 135), und mit wenigstens einem im Innenraum angeordneten, um eine Längsachse (L) der Filterkerze rotierbaren Spülkörper (40; 140; 240), der mit einem radial vorkragenden, durch Rotation des Spülkörpers (40; 140; 240) entlang der Filterwandinnenseite (34'; 134') entlangbewegbaren Spülspalt (45; 145; 245) zum Rückspülen der Filterwand (134) versehen ist, **dadurch gekennzeichnet, dass** der Spülkörper (40; 140; 240) an der Filterkerze (30; 130; 230) drehbar gelagert ist, als konische Hohlwelle mit einem geschlossenen kleinen Wellenende (43; 143: 243) und mit einem axial offenen großen Wellenende (42; 142; 242), zwischen denen sich der radial bis an die Filterwandinnenseite vorkragende Spülspalt (45; 145; 245) erstreckt, ausgebildet ist, und drehfest mit wenigstens einem in der Filterkerze angeordneten Turbinenrad (48; 151, 152; 251) als Antriebsorgan verbunden ist.

2. Filterkerze nach Anspruch 1, **gekennzeichnet durch** eine auf der Längsachse angeordnete, sich von einem Filterkerzenende zum anderen Filterkerzenende erstreckenden Lagerachse (36) für den wenigstens einen Spülkörper (40), an der dieser drehbar gelagert ist.

3. Filterkerze nach Anspruch 1 oder 2, **dadurch gekennzeichnet, dass** die Filterkerze an beiden Filterkerzenenden (31, 32) offen ist und im Innenraum (34) zwei Spülkörper (40) angeordnet sind, wobei jeweils die großen Wellenenden (42) jedes Spülkörpers (40) an einem der Filterkerzenenden (31, 32) angeordnet sind und die kleinen Wellenenden (43) einander in der Filterkerzenmitte gegenüberliegen.

4. Filterkerze nach Anspruch 2 und 3, **dadurch gekennzeichnet, dass** zwischen den kleinen Wellenenden (43) ein Stützkörper (38) für die Lagerachse (36) angeordnet ist, wobei der Stützkörper (38) vorzugsweise aus einer Sternscheibe besteht, die mit ihren Sternenden an der Filterwand (34) anliegt.

5. Filterkerze nach einem der Ansprüche 1 bis 4, **dadurch gekennzeichnet, dass** das Turbinenrad (48) jeweils im Hohlraum des Spülkörpers (40) angeordnet ist.

6. Filterkerze nach Anspruch 1 oder 2, **dadurch gekennzeichnet, dass** die Filterkerze (130) zwei offene Filterkerzenenden aufweist und in der Filterkerze (130) ein sich von einem Filterkerzenende zum anderen Filterkerzenende durchgehend erstreckender Spülkörper (140) angeordnet ist, wobei vorzugsweise ein erstes Turbinenrad (152) an oder nahe des offenen Wellenendes (142) und ein zweites Turbinenrad (151) an oder nahe des anderen, geschlossenen Wellenendes (143) angeordnet ist, wobei vorzugsweise die beiden Turbinenräder (151, 152) die Drehlager zwischen Filterkerze (130) und Spülkörper (140) bilden.

7. Filterkerze nach einem der Ansprüche 1 bis 6, **dadurch gekennzeichnet, dass** an wenigstens einem offenen Filterkerzenende (32) zwischen dem großen Wellenende (42) des Spülkörpers (40) und der Filterkerze (30) ein Ringspalt (S) vorgesehen ist, dessen Spaltbreite in Radialrichtung gleich oder größer ist als der Radialabstand des Spülspaltes (45) von der Filterwandinnenseite (34').

8. Filterkerze nach Anspruch 6 und 7, **dadurch gekennzeichnet, dass** ein Turbinenrad (152) im Ringspalt angeordnet ist und ein Drehlager für den Spülkörper bildet.

9. Filterkerze nach einem der Ansprüche 1 bis 8, **dadurch gekennzeichnet, dass** der Spülkörper (40) um 180° versetzt zum vorkragenden Spülspalt (145) mit einer Ausbuchtung, einem Ausgleichsgewicht oder Ausgleichssteg (149) versehen ist.

10. Filterkerze nach Anspruch 1 oder 2, **dadurch gekennzeichnet, dass** die Filterkerze (230) an beiden Filterkerzenenden (231, 232) offen ist und im Innenraum zwei Spülkörper (240) angeordnet sind, dass jeweils die kleineren Wellenenden (243) jedes Spülkörpers (240) einander in der Filterkerzenmitte gegenüberliegen und die größeren Wellenenden (242) einem der Filterkerzenenden (231, 232) zugewandt angeordnet sind, und dass dem größeren Wellenende (242) jeweils ein Leitabschnitt (260) vorgeschaltet ist, dessen Außenumfang (261) sich zum offenen Filterkerzenende (231, 232) verjüngt, wobei am Außenumfang (261) des Leitabschnitts (260) jeweils das Turbinenrad (251) angeordnet oder ausgebildet ist, wobei vorzugsweise der Außenumfang (261) des Leitabschnitts (260) geschlossen ist und keinen Spülspalt aufweist.

11. Filterkerze nach Anspruch 10, **dadurch gekennzeichnet, dass** im offenen Filterkerzenende (231, 232) stationäre Leitschaufeln (266) zur Drallerzeugung angeordnet sind.

12. Filterkerze nach einem der Ansprüche 10 oder 11, **dadurch gekennzeichnet, dass** zwischen den kleinen Wellenenden (243), oder mit diesen verbundenen Schlussscheiben (276), ein Stützkörper (238) für die Lagerachse (236) angeordnet ist, wobei zwischen dem Stützkörper (238) und den kleinen Wellenden (243) oder Schlussscheiben (276) jeweils eine Spiralfeder angeordnet ist.

13. Rückspülfilter mit mehreren Filterkerzen und wenigstens einem Rückspülorgan für die Filterkerzen zum Filtern von Fluiden, insbesondere zum Filtern von See- oder Meerwasser, mit einem Einlass (E) für zu filterndes Fluid, mit einem Auslass (A) für gefiltertes Fluid, wobei jede Filterkerze eine zylindrische, mittels eines Filtermittels gebildete, von dem zu reinigenden Fluid durchströmbare Filterwand (34; 134), zwei Filterkerzenenden (31, 32), von denen wenigstens ein Filterkerzenende offen ist, und einen von der Filterwand (34; 134) umspannten Innenraum (35; 135) aufweist, in welchem wenigstens ein um eine Längsachse (L) der Filterkerze rotierbarer Spülkörper (40; 140) angeordnet ist, der mit einem radial vorkragenden, durch Rotation des Spülkörpers (40; 140) entlang der Filterwandinnenseite (34'; 134') entlangbewegbaren Spülspalt (45; 145) zum Rückspülen der Filterwand versehen ist, **dadurch gekennzeichnet, dass** jede Filterkerze (30;130) mit einem Spülkörper (40; 140) versehen ist, der drehbar innerhalb der Filterkerze (30; 130) gelagert ist und als konische Hohlwelle mit einem geschlossenen kleinen Wellenende (43; 143) und mit einem axial offenen großen Wellenende (42;142) ausgebildet ist, wobei der Spülkörper (40; 140) drehfest mit wenigstens einem in der Filterkerze angeordneten Turbinenrad (48; 151) als Antriebsorgan verbunden ist.

14. Rückspülfilter nach Anspruch 13, **dadurch gekennzeichnet, dass** die Filterkerzen (30) gemäß einem der Ansprüche 2 bis 6 ausgebildet sind und im Rückspülfilter für jedes Filterkerzenende ein drehbares Rückspülorgan (21; 22) vorgesehen ist, mit welchem das jeweilige Filterkerzenende an einen Spülauslass anschließbar ist, wobei vorzugsweise die Rückspülorgane (21; 22) derart winkelversetzt zueinander angeordnet sind, dass das eine der Rückspülorgane mit einer Filterkerze zu einem anderen Zeitpunkt als das andere Rückspülorgan zusammenwirkt.

15. Rückspülfilter nach Anspruch 13, **dadurch gekennzeichnet, dass** die Filterkerzen (130) gemäß einem der Ansprüche 6, 7 und/oder 8 ausgebildet sind, und Rückspülorgane (121, 122) paarweise den entgegengesetzten Filterkerzenenden einer rückzuspülenden Filterkerze (130) zugeordnet sind, wobei das dem kleinen Wellenende (143) des Rückspülkörpers zugeordnete Rückspülorgan (122) einen größeren Durchmesser oder lichten Querschnitt aufweist als das dem größeren Wellenende (142) des Rückspülkörpers zugeordnete Rückspülorgan.

## Revendications

1. Bougie filtrante cylindrique pour un filtre à rinçage à contre-courant comprenant de préférence une pluralité de bougies filtrantes et au moins un élément de rinçage à contre-courant pour les bougies filtrantes pour filtrer des fluides, en particulier pour filtrer de l'eau de mer ou de l'eau salée, ayant une paroi de filtre cylindrique (34 ; 134 ; 234), qui est formée au moyen d'un milieu de filtre et à travers lequel du fluide à purifier peut s'écouler, ayant deux extrémités de bougie filtrante (31, 32 ; 231, 232), dont au moins une extrémité de bougie filtrante est ouverte, ayant un intérieur (35 ; 135) englobé par la paroi de filtre, et ayant au moins un élément de rinçage (40 ; 140 ; 240) qui est agencé dans l'intérieur, est rotatif autour d'un axe longitudinal (L) de la bougie filtrante, et qui est muni d'un espacement de rinçage en saillie de façon radiale (45 ; 145 ; 245) mobile le long de la face intérieure (34' ; 134') de la paroi de filtre par rotation de l'élément de rinçage (40 ; 140 ; 240) afin de rincer à contre-courant la paroi de filtre (134), **caractérisé en ce que** l'élément de rinçage (40 ; 140 ; 240) est monté en rotation sur la bougie filtrante (30 ; 130 ; 230), est formé comme un arbre creux conique avec une petite extrémité d'arbre fermée (43 ; 143 ; 243) et avec une grande extrémité d'arbre ouverte de façon axiale (42 ; 142 ; 242), entre lesquelles l'espacement de rinçage (45 ; 145 ; 245) en saillie de façon radiale autant que la face intérieure de la paroi de filtre s'étend, et établit un lien solidaire avec au moins une roue de turbine (48, 151, 152 ; 251), agencée dans la bougie filtrante en tant qu'élément d'entraînement.

2. Bougie filtrante selon la revendication 1, **caractérisée par** un axe de palier (36) agencé sur l'axe longitudinal et s'étendant à partir d'une extrémité de bougie filtrante jusqu'à l'autre extrémité de bougie filtrante pour l'au moins un élément de rinçage (40), qui est monté en rotation sur ledit axe de palier.

3. Bougie filtrante selon la revendication 1 ou 2, **caractérisée en ce que** la bougie filtrante est ouverte aux deux extrémités de bougie filtrante (31, 32) et deux éléments de rinçage (40) sont agencés dans l'intérieur (34), les grandes extrémités d'arbre (42) de chaque élément de rinçage (40) étant agencées au niveau d'une des extrémités de bougie filtrante (31, 32) et les petites extrémités d'arbre (43) étant agencées opposées l'une à l'autre au milieu de la bougie filtrante.

4. Bougie filtrante selon les revendications 2 et 3, **caractérisée en ce qu'**un élément de support (38) pour l'axe de palier (36) est agencé entre les petites extrémités d'arbre (43), l'élément de support (38) consistant de préférence en un disque en étoile qui porte via ses extrémités en étoile contre la paroi de filtre (34).

5. Bougie filtrante selon une des revendications 1 à 4, **caractérisée en ce que** la roue de turbine (48) est agencée dans l'espace creux de l'élément de rinçage (40).

6. Bougie filtrante selon la revendication 1 ou 2, **caractérisée en ce que** la bougie filtrante (130) comprend deux extrémités de bougie filtrante ouvertes, et un élément de rinçage (140) s'étendant de façon continue d'une extrémité de bougie filtrante à l'autre extrémité de bougie filtrante est agencé dans la bougie filtrante (130), une première roue de turbine (152) étant de préférence agencée au niveau, ou proche de, l'extrémité d'arbre ouverte (142), et une seconde roue de turbine (151) étant de préférence agencée au niveau, ou proche de, l'autre extrémité d'arbre fermée (143), dans laquelle de préférence les deux roues de turbine (151, 152) forment le palier rotatif entre la bougie filtrante (130) et l'élément de rinçage (140).

7. Bougie filtrante selon une des revendications 1 à 6, **caractérisée en ce qu'**un espacement annulaire (S), dont la largeur d'espacement dans la direction radiale est égale à ou plus grande que l'espacement radial de l'espacement de rinçage (45) depuis la face intérieure (34') de la paroi de filtre, est disposé au moins au niveau d'une extrémité de bougie filtrante ouverte (32) entre la grande extrémité d'arbre (42) de l'élément de rinçage (40) et la bougie filtrante (30).

8. Bougie filtrante selon les revendications 6 et 7, **caractérisée en ce qu'**une roue de turbine (152) est agencée dans l'espacement annulaire et forme un palier rotatif pour l'élément de rinçage.

9. Bougie filtrante selon une des revendications 1 à 8, **caractérisée en ce que** l'élément de rinçage (40), déplacé de 180° par rapport à l'espacement de rinçage en saillie (145), est muni d'un renflement, un poids d'équilibrage, ou d'une âme d'équilibrage (149).

10. Bougie filtrante selon la revendication 1 ou 2, **caractérisée en ce que** la bougie filtrante (230) est ouverte aux deux extrémités de bougie filtrante (231, 232), et deux éléments de rinçage (240) sont agencés dans l'intérieur, **en ce que** les extrémités d'arbre plus petites (243) de chaque élément de rinçage (240) sont agencées en face l'une de l'autre au milieu de la bougie filtrante et les extrémités d'arbre plus grandes (242) sont agencées en face d'une des extrémités de bougie filtrante (231, 232), et **en ce que** dans chaque cas l'extrémité d'arbre plus grande (242) est agencée en aval d'une partie de guidage (260), dont la périphérie extérieure (261) va en s'amincissant vers l'extrémité de bougie filtrante ouverte (231, 232), la roue de turbine (251) dans chaque cas étant agencée ou formée sur la périphérie extérieure (261) de la partie de guidage (260), dans lequel de préférence la périphérie extérieure (261) de la partie de guidage (260) est fermée et ne comprend aucun espacement de rinçage.

11. Bougie filtrante selon la revendication 10, **caractérisée en ce que** des aubes de guidage immobiles (266) pour produire une torsion sont agencées dans l'extrémité de bougie filtrante ouverte (231, 232).

12. Bougie filtrante selon une des revendications 10 ou 11, **caractérisée en ce qu'**un élément de support (238) pour l'axe de palier (236) est agencé entre les petites extrémités d'arbre (243) ou des plaques d'extrémité (276) reliées à ce dernier, un ressort en spirale étant agencé dans chaque cas entre l'élément de support (238) et les petites extrémités d'arbre (243) ou les plaques d'extrémité (276).

13. Filtre de rinçage à contre-courant ayant une pluralité de bougies filtrantes et au moins un élément de rinçage à contre-courant pour les bougies filtrantes pour filtrer des fluides, en particulier pour filtrer de l'eau de mer ou de l'eau salée, ayant une entrée (E) pour du fluide à filtrer, ayant une sortie (A) pour le fluide filtré, chaque bougie filtrante comprenant une paroi de filtre cylindrique (34 ; 134), qui est formée au moyen d'un milieu de filtre et à travers lequel le fluide à purifier peut s'écouler, deux extrémités de bougie filtrante (31, 32), dont au moins une extrémité de bougie filtrante est ouverte, et un intérieur (35 ; 135) englobé par la paroi de filtre (34 ; 134), au moins un élément de rinçage (40 ; 140) rotatif autour d'un axe longitudinal (L) de la bougie filtrante étant agencé dans ledit intérieur et étant muni d'un espacement de rinçage en saillie de façon radiale (45 ; 145) mobile le long de la face intérieure (34' ; 134') de la paroi de filtre par rotation de l'élément de rinçage (40 ; 140) afin de rincer à contre-courant la paroi de filtre, **caractérisé en ce que** chaque bougie filtrante (30 ; 130) est munie d'un élément de rinçage (40 ; 140) qui est monté en rotation à l'intérieur de la bougie filtrante (30 ; 130) et est formé comme un arbre creux conique avec une petite extrémité d'arbre fermée (43 ; 143) et avec une grande extrémité d'arbre ouverte de façon axiale (42 ; 142), l'élément de rinçage (40 ; 140) établissant une liaison solidaire avec au moins une roue de turbine (48 ; 151), qui est agencée dans la bougie filtrante en tant qu'élément d'entraînement.

14. Filtre de rinçage à contre-courant selon la revendication 13, **caractérisé en ce que** les bougies filtrantes (30) sont formées selon une des revendications 2 à 6, et, dans le filtre de rinçage à contre-courant, un élément de rinçage à contre-courant rotatif (21 ; 22) est prévu pour chaque extrémité de bougie filtrante, avec laquelle l'extrémité de bougie filtrante respective peut être reliée à une sortie de rinçage, dans lequel de préférence les éléments de rinçage à contre-courant (21 ; 22) sont agencés d'une façon angulairement décalée l'un par rapport à l'autre d'une telle façon qu'un des éléments de rinçage à contre-courant coopère avec une bougie filtrante à un moment différent dans le temps en comparaison à l'autre élément de rinçage à contre-courant.

15. Filtre de rinçage à contre-courant selon la revendication 13, **caractérisé en ce que** les bougies filtrantes (130) sont formées selon une des revendications 6, 7 et/ou 8, et des éléments de rinçage à contre-courant (121, 122) sont associés en couples avec les extrémités de bougie filtrante opposées d'une bougie filtrante (130) à rincer à contre-courant, l'élément de rinçage à contre-courant (122) associé à la petite extrémité d'arbre (143) de l'élément de rinçage à contre-courant ayant un plus grand diamètre ou une section transversale libre que l'élément de rinçage à contre-courant associé à la plus grande extrémité d'arbre (142) de l'élément de rinçage à contre-courant.
